# EUROPEAN PATENT APPLICATION

(11) **EP 3 315 797 A1**
(43) Date of publication of application: **02.05.2018**
(21) Application number: 17196934.8
(22) Date of filing: 17.10.2017
(51) Int. Cl.: F16B 23/00, B25B 15/00, B64D 27/00

(54) **FASTENER WITH OPTIMIZED DRIVE FEATURES FOR MAINTENANCE**

(30) Priority: 31.10.2016 US 201615339159
(71) Applicant: United Technologies Corporation, Farmington, CT 06032 (US)
(72) Inventor: GREENBERG, Michael D., Bloomfield, CT Connecticut 06002 (US); TIRONE, III, John P., Moodus, CT Connecticut 06469 (US); PEZZETTI, Jr., Michael C., Vernon, CT Connecticut 06066 (US); GOSSNER, Mark B., Durham, CT Connecticut 06422 (US)
(74) Representative: Gittins, Alex Michael

(57) **Abstract**

Aspects of the disclosure are directed to a system comprising a fastener that includes a head that includes a feature pattern (E';D') to accommodate installation and removal of the fastener, where the feature pattern (E';D') is biased to provide a first torque capability in the installation of the fastener and a second torque capability in the removal of the fastener, and where the second torque capability is greater than the first torque capability.

## Description

### BACKGROUND

Aerospace equipment, such as aircraft and gas turbine engines, is subject to inspection and maintenance activities due to, e.g., wear of components over their operational lifetimes.

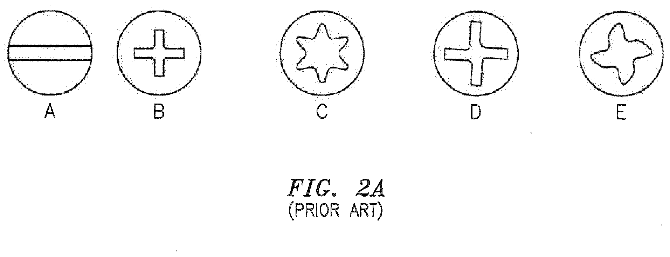

Fasteners are used to join/mate various aircraft and engine components. Many fasteners balance head strength and drive torque capability with various drive features. Referring to FIG. 2A, drive patterns/features have advanced from a simple symmetrical slotted configuration (A) or Philips configuration (B) to latest generation TORX® or TORX Plus® configurations (C), an asymmetrical offset cruciform configuration (D), and a Mortorq® configuration (E). Countersunk head screws are especially challenging to maximize drive torque with the limited space that is frequently available.

Once a fastener is installed, it generally takes more torque to remove the fastener than was required during installation for the following reasons: (1) static friction is higher than dynamic friction (e.g., the coefficient of friction at rest is larger than the coefficient of friction during motion), (2) the fastener may be subject to corrosion over time (which can cause the fastener to bind/seize), and (3) contamination (e.g., dirt, sand, etc.) may serve to counteract the torque that is applied. Fastener heads having asymmetrical feature patterns have the ability to bias the torque capability in one direction. For example, such asymmetrical feature patterns have been biased in an installation direction, resulting in less relative removal torque capability. This reduced removal capability is detrimental to maintenance, resulting in labor intensive removal techniques such as drilling, re-tapping, etc., as would be known to one of skill in the art. In extreme cases, an otherwise routine maintenance activity may necessitate removal of a substantial portion of the engine.

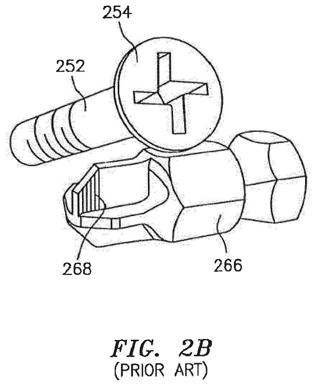

FIG. 2B illustrates a fastener 252 that includes the offset cruciform configuration (D) of FIG. 2A formed in a head 254 of the fastener 252. Also shown in FIG. 2B is a bit 266 that may be used to install or remove the fastener 252 from, e.g., a component, an assembly, etc. The bit 266 may include one or more serrated edges 268 that may assist in gripping a surface of the head 254 to avoid a cam-out condition, or more generally, to partially offset the high levels of torque that are required to remove the fastener 252 for the reasons described above.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a system comprising: a fastener that includes: a head that includes a feature pattern to accommodate installation and removal of the fastener, where the feature pattern is biased to provide a first torque capability in the installation of the fastener and a second torque capability in the removal of the fastener, and where the second torque capability is greater than the first torque capability. In some embodiments, the feature pattern includes a center portion and at least two lobes emanating from the center portion. In some embodiments, the at least two lobes includes three lobes, four lobes, or five lobes. In some embodiments, the at least two lobes are asymmetrical with respect to the center portion. In some embodiments, the at least two lobes are asymmetrical with respect to each other. In some embodiments, a first of the at least two lobes is longer than a second of the at least two lobes. In some embodiments, the feature pattern corresponds to a reflected version of a conventional offset cruciform configuration. In some embodiments, the feature pattern corresponds to a reflected version of a conventional Mortorq® configuration. In some embodiments, the fastener is installed on an engine. In some embodiments, the engine is installed on an aircraft. In some embodiments, the fastener is installed on a mobile device. In some embodiments, the mobile device is a smartphone. In some embodiments, the system further comprises: a toolset that includes a second feature pattern that substantially mirrors the feature pattern. In some embodiments, the toolset includes at least one of a screwdriver or a bit. In some embodiments, the toolset includes one or more ribs. In some embodiments, the toolset includes a grip coating. In some embodiments, the toolset is treated for wear.

### BRIEF DESCRIPTION OF THE DRAWINGS

The present disclosure is illustrated by way of example and not limited in the accompanying figures in which like reference numerals indicate similar elements. The drawings are not necessarily drawn to scale unless specifically indicated otherwise.
FIG. 1 is a side cutaway illustration of a geared turbine engine.
FIG. 2A illustrates various prior art drive feature patterns associated with fasteners.
FIG. 2B illustrates a prior art fastener and bit.
FIG. 3A illustrates an existing drive feature pattern for a fastener with reference axes superimposed.
FIG. 3B illustrates a drive feature pattern resulting from a reflection of the drive feature pattern of FIG. 3A with respect to one of the reference axes of FIG. 3A.
FIG. 4A illustrates an existing drive feature pattern for a fastener with reference axes superimposed.
FIG. 4B illustrates a drive feature pattern resulting from a reflection of the drive feature pattern of FIG. 4A with respect to one of the reference axes of FIG. 4A.
FIG. 5 illustrates a toolset in accordance with aspects of this disclosure.
FIG. 6 illustrates a bit incorporating ribs in accordance with aspects of this disclosure.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

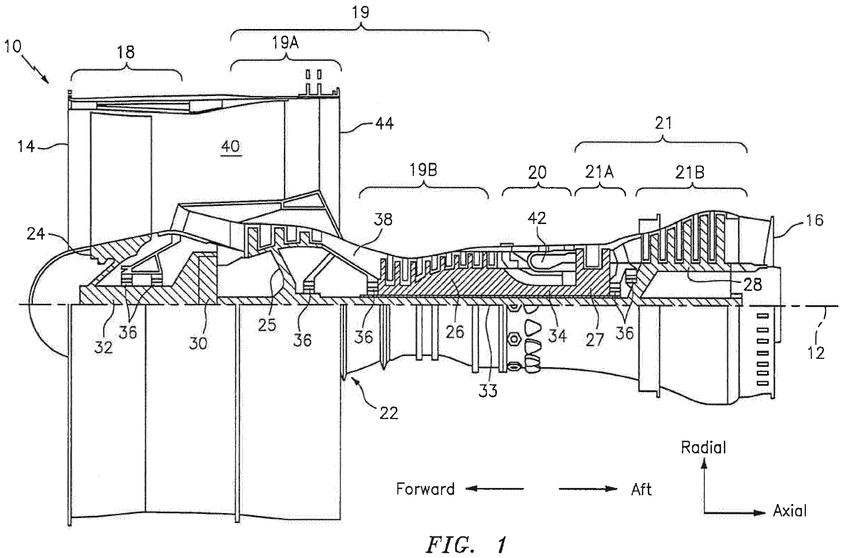

Aspects of the disclosure may be applied in connection with an aircraft or a gas turbine engine, though this is not a limitation nor are the aspects of this disclosure limited to aerospace applications. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically trapped, fastened, welded, brazed, riveted, tabbed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36; e.g., rolling element and/or thrust bearings. Each of these bearings 36 is connected to the engine housing 22 by at least one stationary structure such as, for example, an annular support strut.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines. Aspects of the disclosure may be applied in connection with non-geared engines.

As described above in relation to FIGS. 2A-2B, conventionally the drive features of a fastener (which may be used in the manufacture/assembly of the engine 10 of FIG. 1) are biased in an installation direction, thereby necessitating a greater amount of torque to remove the fastener relative to the torque required to install the fastener in the first instance. To counter this bias, a feature pattern formed in a head of the fastener may be biased in the removal direction.

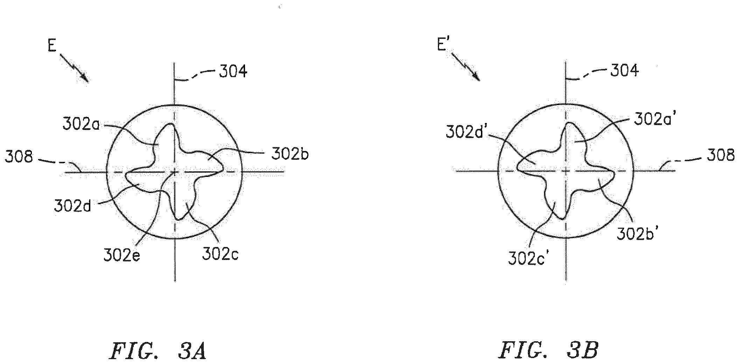

To illustrate, FIG. 3A illustrates a conventional feature pattern E (in this case, having a Mortorq® configuration) with lobes 302a, 302b, 302c, and 302d arranged around, and emanating from, a center portion 302e. Superimposed in FIG. 3A are reference lines/axes 304 and 308 arranged orthogonal to one another and intersecting with one another at, or substantially near, the center portion 302e. If the feature pattern E of the fastener shown in FIG. 3A is indicative of a conventional fastener that is biased in the installation direction with respect to the fastener, to bias the fastener in the removal direction one need only to obtain a reflected version of the feature pattern with respect to one of the axes 304 or 308. For example, after reflection about/across one of the axes 304 or 308 the feature pattern may appear as shown in FIG. 3B with respect to the fastener E', with lobes 302a'-302d' corresponding to their respective counterpart lobes 302a-302d in FIG. 3A.

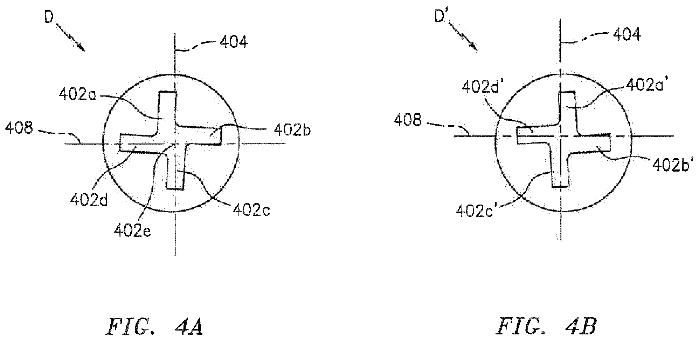

Yet another illustrative embodiment is provided in relation to FIGS. 4A-4B. For example, FIG. 4A illustrates a conventional feature pattern D (in this case, having an asymmetrical offset cruciform configuration) with lobes 402a, 402b, 402c, and 402d arranged around, and emanating from, a center portion 402e. Superimposed in FIG. 4A are reference lines/axes 404 and 408 that are arranged orthogonal to one another and intersecting with one another at, or substantially near, the center portion 402e. If the feature pattern D of the fastener shown in FIG. 4A is indicative of a conventional fastener that is biased in the installation direction with respect to the fastener, to bias the fastener in the removal direction one need only to obtain a reflected version of the feature pattern with respect to one of the axes 404 or 408. For example, after reflection about/across one of the axes 404 or 408 the feature pattern may appear as shown in FIG. 4B with respect to the fastener D', with lobes 402a'-402d' corresponding to their respective counterpart lobes 402a-402d in FIG. 4A.

While some of the embodiments described herein related to a four-lobed feature pattern formed in a head of a fastener, any number/count of lobes may be included in some embodiments. For example, a feature pattern may include at least two lobes. A feature pattern may include two, three, four, five or more lobes. In some embodiments, the lobes of the feature pattern may be asymmetrical with respect to one another or with respect to a center portion of the feature pattern. Features may be asymmetrical to each other, such as for example three long lobes and two short lobes.

While some of the embodiments described herein related to the use of a fastener as part of an engine, the fasteners described herein may be applied in other types of application environments. For example, the fasteners described herein may be used in connection with mobile devices (e.g., smartphones).

The fasteners described herein may be used as replacements for fasteners that are already deployed/in-service/in-the-field. For example, fasteners incorporating the feature patterns shown in FIGS. 3B and 4B may serve as substitutes/replacements for fasteners incorporating the feature patterns shown in FIGS. 3A and 4A, respectively. Still further, newly designed/developed hardware/platforms may incorporate the fasteners/feature patterns (e.g., the feature patterns shown in FIGS. 3B and 4B) that are described herein.

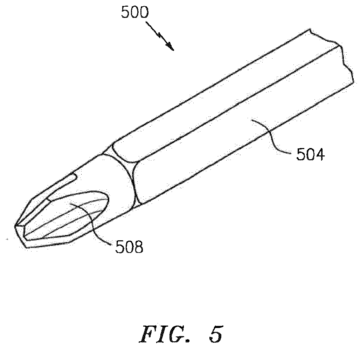

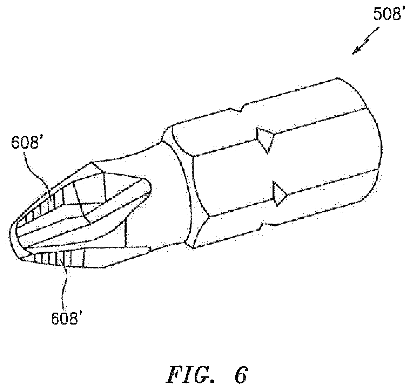

Toolsets may be developed to accommodate the feature patterns that are described herein. For example, referring to FIG. 5 a toolset 500 may include a screwdriver 504, one or more bits 508, etc.. The toolset 500 (e.g., the bit 508) may include a feature pattern that substantially mirrors/mimics a feature pattern associated with a fastener (e.g., the feature patterns shown in FIGS. 3B and 4B). A dimension (e.g., a depth) of one or more aspects (e.g., lobes) of a feature pattern may be selected to facilitate installation or removal of a fastener. For example, the dimension may be selected to minimize/reduce the likelihood of a cam-out condition. The toolset 500 may be treated for/to reduce wear. For example, there are coatings/treatments that may be applied to a surface of the toolset 500 to reduce wear, such as titanium or anti-slip coatings, e.g., diamond, to further enhance grip. The toolset 500 may include one or more ribs that may enhance/increase gripping capabilities (see FIG. 6 - bit 508' incorporating ribs 608').

Technical effects and benefits of this disclosure include a feature pattern formed in a head of a fastener that is used to install or remove the fastener. The feature pattern may be biased in a direction of removal of the fastener in order to provide increased torque capability in the removal direction. By biasing the feature pattern of the fastener in the removal direction, the efficiency of the torque that is applied during the removal of the fastener may be increased/maximized. Stated slightly differently, for a given amount of applied torque a fastener may be more easily/readily removed when the feature pattern is biased in the direction of removal of the fastener. In this respect, if the feature pattern provides for a first torque capability upon installation of the fastener and a second torque capability upon removal of the fastener, the second torque capability may be greater than the first torque capability. Additionally, if the feature pattern is biased in the direction of removal of the fastener the fastener will be less susceptible to over-torqueing (e.g., an application of excessive torque in an amount greater than a threshold) during an assembly procedure. Aspects of the disclosure may streamline inspection/maintenance activities, enabling an engine to be restored/returned to service earlier than it otherwise would have.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A system comprising:
a fastener that includes:
a head that includes a feature pattern (E';D') to accommodate installation and removal of the fastener,
wherein the feature pattern (E';D') is biased to provide a first torque capability in the installation of the fastener and a second torque capability in the removal of the fastener, and
wherein the second torque capability is greater than the first torque capability.

2. The system of claim 1, wherein the feature pattern (E';D') includes a center portion (302e;402e) and at least two lobes (302a'-d';402a'-d') emanating from the center portion (302e;402e).

3. The system of claim 2, wherein the at least two lobes (302a'-d';402a'-d') includes three lobes, four lobes, or five lobes.

4. The system of claim 2 or 3, wherein the at least two lobes (302a'-d';402a'-d') are asymmetrical with respect to the center portion (302e;402e).

5. The system of claim 2, 3 or 4, wherein the at least two lobes (302a'-d';402a'-d') are asymmetrical with respect to each other.

6. The system of claim 5, wherein a first of the at least two lobes (302a'-d';402a'-d') is longer than a second of the at least two lobes (302a'-d';402a'-d').

7. The system of any preceding claim, wherein the feature pattern (E';D') corresponds to a reflected version of a conventional offset cruciform configuration.

8. The system of any of claims 1 to 6, wherein the feature pattern (E';D') corresponds to a reflected version of a conventional Mortorq® configuration.

9. The system of any preceding claim, wherein the fastener is installed on an engine (10), optionally wherein the engine (10) is installed on an aircraft.

10. The system of any of claims 1 to 8, wherein the fastener is installed on a mobile device, optionally wherein the mobile device is a smartphone.

11. The system of any preceding claim, further comprising:
a toolset (500) that includes a second feature pattern that substantially mirrors the feature pattern (E';D').

12. The system of claim 11, wherein the toolset (500) includes at least one of a screwdriver (504) or a bit (508;508').

13. The system of claim 11 or 12, wherein the toolset (500) includes one or more ribs (608').

14. The system of claim 11, 12 or 13, wherein the toolset (500) includes a grip coating.

15. The system of any of claims 11 to 14, where the toolset (500) is treated for wear.
